Europäisches Patentamt

European Patent Office

Office européen des brevets

(19)

(11) Veröffentlichungsnummer : **0 102 522**
**B1**

(12) # EUROPÄISCHE PATENTSCHRIFT

(45) Veröffentlichungstag der Patentschrift :
25.03.87

(51) Int. Cl.⁴ : **B 29 C 51/12**

(21) Anmeldenummer : 83107545.2

(22) Anmeldetag : 01.08.83

(54) **Verfahren zur Herstellung eines konischen Kunststoffbehälters mit einem nach aussen abstehenden Oeffnungsrand durch Tiefziehen.**

(30) Priorität : 10.08.82 CH 4792/82

(43) Veröffentlichungstag der Anmeldung :
14.03.84 Patentblatt 84/11

(45) Bekanntmachung des Hinweises auf die Patenterteilung : 25.03.87 Patentblatt 87/13

(84) Benannte Vertragsstaaten :
BE CH IT LI LU SE

(56) Entgegenhaltungen :
BE-A- 737 179
DE-A- 3 120 075
FR-A- 1 530 626
FR-A- 2 088 107
FR-A- 2 111 898
FR-A- 2 501 159
US-A- 3 203 611

(73) Patentinhaber : Sandherr Packungen AG
Rheinstrasse 4
CH-9444 Diepoldsau (CH)

(72) Erfinder : Schellenberg, Walter
Unterdorfstrasse
CH-9444 Diepoldsau (CH)

(74) Vertreter : Quehl, Horst Max, Dipl.-Ing.
Glattalstrasse 37 Postfach A-165
CH-8052 Zürich (CH)

Jouve, 18, rue St-Denis, 75001 Paris, France

**Beschreibung**

Die Erfindung betrifft ein Verfahren zur Herstellung eines konischen Kunststoffbehälters mit den Merkmalen des Oberbegriffs des Patentanspruchs 1 sowie einen durch das Verfahren hergestellten tiefgezogenen konischen Kunstoffbehälter mit den Merkmalen der Oberbegriffs des Patentanspruchs 4.

Ein Verfahren sowie ein Behälter dieser Art sind bekannt durch die DE-A-31 20 075 des gleichen Anmelders. Ein solches Verfahren ermöglicht eine bedeutende Einsparung an Kunststoffmaterial, so dass der hergestellte Behälter beispielsweise nur 25 % Kunststoffanteil aufweist. Ausserdem kann die andersartige Materialeingenschaft der mit dem Kunststoffbehälter verbundenen Papierschicht vorteilhaft ausgenutzt werden, z. B. indem sie sich leicht im Druckverfahren verzieren lässt und bessere Isolationseigenschaften aufweist als das Kunststoffmaterial bei Verwendung des Behälters als Trinkgefäss für heisse Getränke. Bei diesem bekannten Behälter erweist es sich jedoch gelegentlich als Nachteil, dass der Behälter einen äusseren Papierbehälter aufweist, so dass auch der Behälterboden aus Papier- bzw. Kartonmaterial besteht, indem beim Aufsetzen des Behälters auf eine nasse Unterlage das Kartonmaterial beschädigt oder zerstört Es wurde deshalb bereits vorgeschlagen, das Eindringen von Feuchtigkeit zu erschweren, indem das Kartonmaterial wasserabstossend imprägniert oder mit einem äusseren Kunststoffilm versehen wird. Der DE-A-31 20 075 ist ausserdem zu entnehmen, dass es nicht notwendig ist, die äussere, nicht aus Kunststoff bestehende Schicht durch Kleben oder Verschweissen mit dem Kunststoffbecher zu verbinden, obwohl empfohlen wird, zumindest im Bereich des Bodenteils des Behälters ein Heissverklebung vorzusehen.

Durch die DE-A-20 52 877 ist es weiterhin bekannt, beim Tiefziehen eines Behälters aus einer Kunststoffolie diesen in der Form mit einer Etikette zu verbinden, indem diese eine Oberfläche aufweist, die mit der Kunststofolie verschweisst.

Durch die US-A-3 203 611 ist es bekannt, an einem Kunststoffbehälter eine Isoliermanschette aus geschäumtem Kunststoffmaterial anzuformen, wobei die Haftung der Isoliermanschette durch teilweise Verschweissung zwischen den Kunststoffmaterialien erreicht wird.

Der Erfindung liegt die Aufgabe zugrunde, ein Verfahren der genannten Art zu finden, das eine Einsparung an Kunststoffmaterial ermöglicht, ohne dass die äussere Papierschicht beim Aufsetzen des Behälters auf eine nasse Unterlage mit Feuchtigkeit in Kontakt gelangt, so dass eine besondere wasserabstossende Behandlung der Papierschicht vermeidbar ist, und das zu einer sicheren Verbindung der Papierschicht mit der Kunststoffolie des Behälters führt, obwohl die Papierschicht mit ihr nicht verschweisst. Die Lösung dieser Aufgabe erfolgt aufgrund der Merkmale des kennzeichnenden Teils der Patentansprüche 1 und 4.

Dadurch, dass die Unterkante der Verstärkungsmanschette beim Tiefziehen von der Kunststoffolie eingeschlossen wird, hat die Manschette einen Abstand von der Aufstandsfläche des Behälters, so dass ein Kontakt mit nassen Unterlagen auf die der Behälter aufgestellt wird, vermieden wird. Dadurch, dass sowohl die Unter- und Oberkante der Manschette durch die Kunststoffolie eingeschlossen wird, ergibt sich eine sichere Verbindung zwischen der Manschette und dem aus Kunststoff bestehenden Teil des Behälters, und die Manschette kann auch wesentlich in Längsrichtung des Behälters wirkende Kräfte aufnehmen, da sie als Stütze wirkt. Solche Kräfte, die zu einer Stauchung des Behälters führen könnten, sind bei seiner Verwendung z. B. in automatischen Füllanlagen oder auch beim Entformen aus der Tiefziehform zu erwarten. Die Verringerung des Kunststoffanteiles im Mantelteil des Behälters auf ein Minimum, das die Dichtigkeit des Behälters gewährleistet, ist durch die in der Tiefziehform hergestellte formschlüssige Verbindung zwischen der Kunststoffolie und der Manschette aus andersartigem Material möglich, ohne dass eine Verschweissung zwischen der Manschette und der Kunststoffolie erforderlich ist.

Das Tiefziehen kann auf an sich bekannte Weise durch mechanisches Vorformen mittels eines Tiefziehstempels und Fertigformen unter Pressluft erfolgen. Die Verringerung der Dicke der Folie beim Tiefziehen in einem gewünschten Bereich kann durch geeignete Temperaturverteilung beim Vorerhitzen der Folie erfolgen, d. h. auf in der Tiefziehtechnik an sich bekannte Weise.

Vorteilhafte Ausgestaltungen des Verfahrens sowie des nach dem Verfahren hergestellten Behälters haben die Merkmale der abhängigen Ansprüche.

Im folgenden wird die Erfindung anhand von in der Zeichnung dargestellten Ausführungsbeispielen weiter erläutert. Es zeigt :

Figur 1 zwei Querschnittshälften von Behältern, die sich nur in der Ausbildung ihres oberen Randes unterscheiden, und

Figur 2 einen Teilquerschnitt durch einen Behälter entsprechend einem weiteren Ausführungsbeispiel.

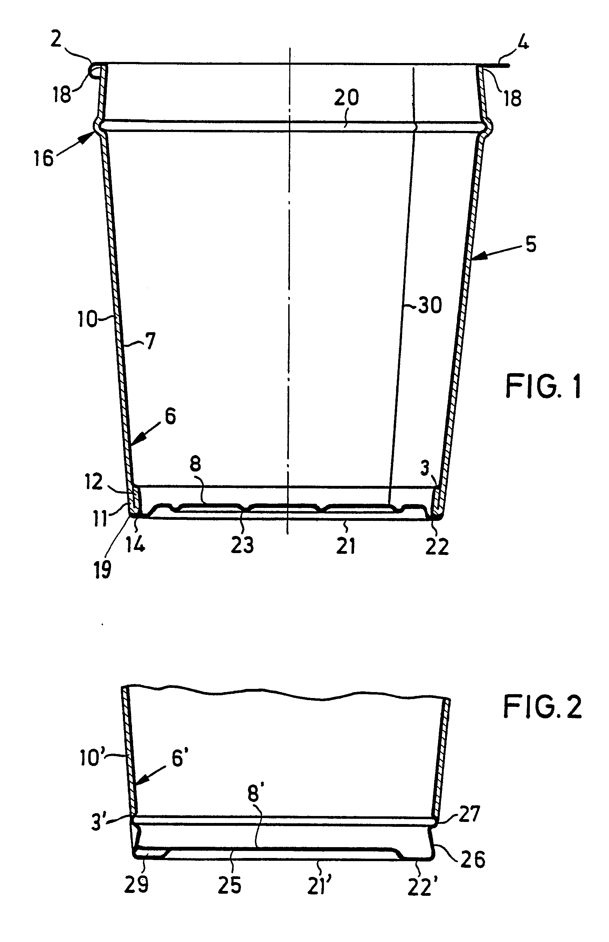

Ein Behälter nach Fig. 1, beispielsweise in Ausbildung entsprechend der linksseitigen Schnittdarstellung wird als Trinkbecher oder entsprechend der rechtsseitigen Schnittdarstellung als luftdicht verschliessbarer Becher, z. B. als Joghurt-Becher verwendet. Entsprechend ist im ersteren Fall der Behälterrand mit einer Abrundung 2 versehen, während er im zweiten Fall mit einem Siegelflansch 4 versehen ist. Auf die Oberseite des Siegelflansches 4 wird eine nicht dargestellte Verschlussfolie aufgesiegelt.

Der erfindungsgemässe Kunststoffbehälter 5 hat eine innere, aus einer tiefgezogenen Folie geformte Kunststoffschicht 6, die von einem Mantelteil 7 in einem Stück in einen Bodenteil 8 übergeht, so dass die Dichtheit des Behälters gewährleistet ist. Der Mantelteil 7 hat beim Tiefziehen eine wesentlich geringere Wanddicke erhalten und ist von einer Manschette 10 aus Papier- bzw. Kartonmaterial umschlossen, die dem Behälter dennoch eine ausreichende Steifigkeit gibt. Als Papier- oder Kartonmaterial können zahlreiche derartige Materialien verwendet werden, abhängig von den jeweiligen an den Becher zu stellenden Anforderungen. Besonders vorteilhaft ist ein preisgünstiges, d. h. grobes Karton-Material, z. B. Recyclingmaterial, das einseitig mit einer Papierschicht beschichtet ist, die sich leicht zu Herstellung von Verzierungen und- /oder Beschriftungen bedrucken lässt. Die Manschette bewirkt neben einer erhöhten Steifigkeit und Festigkeit des Behälters auch eine gute Isolation, so dass er als Trinkbecher für heisse Getränke besonders geeignet ist. Im Beispiel nach Fig. 1 ist der untere Rand 11 der Manschette 10 nach innen umgefalzt, wodurch der Bodenbereich des Behälters eine erhöhte Festigkeit gegenüber radial einwirkenden Kräften aufweist. Der sich durch die Umfalzung 12 ergebende Wulst führt auch zu einer formschlüssigen Verbindung zwischen der Manschette 10 und der Kunststoffschicht 6. Durch die Umfalzung nach innen wird ausserdem die untere Schnittkante 3 der Manschette eingeschlossen und somit verborgen, so dass an sie keine Feuchtigkeit herandringen kann. Die Unterkante 19 der Manschette 10 wird von einem umlaufenden, radial nach aussen ragenden Rand 14 des Bodenteiles 8 unterfasst Dies ergibt sich dadurch, dass die Manschette 10 in entsprechender axialer Position, d. h. in Abstand von einem Boden bildenden Teil der Tiefziehform angeordnet wurde. Beim Tiefziehen schmiegt sich die Tiefziehfolie durch Pressluft dicht an die Innenseite der Manschette an. Die feste Verbindung zwischen der Kunststoffschicht 6 und der Manschette kann noch durch in die Behälterwand eingeformte Erhebungen 16 verbessert werden.

Bereits aus hygienischen Gründen ist das Uebergreifen der Oberkante 18 der Manschette 10 durch den Rand 2, 4 des Kunststoffbehälters von Vorteil. Dieses Uebergreifen führt zu einer weiteren formschlüssigen Verbindung zwischen der Manschette und dem Kunststoffbecher. Eine Sicherung der Manschette 10 an dem Kunststoffteil 6 des Behälters in axialer Richtung zur Behälteröffnung hin ergibt sich weiterhin durch die aus fertigungstechnischen Gründen und für die Stapelung der Behälter ausgewählte konischen Form des Mantelteiles des Behälters. Als Erhebung 16 ist beispielsweise eine umlaufende Rille 20 in den Behältermantel eingeprägt, und es versteht sich, dass statt einer Rille auch zahlreiche Rillen oder Profilierungen nebeneinander in dem Behältermantel vorgesehen sein können, die auch zu einer zusätzlichen Versteifung des Behälters beitragen. Vor der Rille 20 aus ist die Behälterwand nach oben hin gegen innen im Winkel von z. B. 5° konisch geneigt. Dies hat den Vorteil, dass derartige Behälter sich lockerer stapeln, d. h. in gestapelter Anordnung sich nicht ineinander verklemmen.

Das Entformen eines solchen Behälters erfordert zwar eine erhöhte axialgerichtete Kraft, jedoch kann diese vom Behälter durch die Stützfunktion der Manschette aufgenommen werden.

Der Boden 8 des Behälters ist vorzugsweise auf an sich bekannte Weise von der Bodenebene 21 weg nach innen abgesetzt, so dass der Behälter nur eine ringförmige Aufstandsfläche 22 aufweist. Profilierungen 23, die verschieden, z. B. waffelförmig, angeordnet sein können, dienen der Versteifung des Behälterbodens.

Beim Ausführungsbeispiel nach Fig. 2 besteht der gesamte Bodenbereich des Behälters aus dem Kunststoffteil 6', indem die Kartonmanschette 10' in grösserem Abstand von der Bodenebene 21' des Behälters angeordnet ist. Eine ausreichende Steifigkeit des Bodenbereichs des Behälters wird durch eine besondere Profilierung mit einem eingezogenen Bodenteil 25 und einer konisch nach innen verlaufenden Umfangswand 26 erreicht. Die Umfangswand 26 geht nach oben in eine ringförmig umlaufende Schulter 27 über, die ebenfalls der Versteifung des Bodenbereiches dient und ausserdem die Kartonmanschette 10' abstützt. Im Gegensatz zum Ausführungsbeispiel nach Fig. 1 ist auch die Unterkante 3' der Manschette 10' ohne Falzung glatt abgeschnitten, obgleich auch bei diesem Ausführungsbeispiel eine Umfalzung 12 vorgesehen werden kann.

Aehnlich wie beim Ausführungsbeispiel nach Fig. 1 ist die Aufstandsfläche 22' des Behälters, z. B. des Bechers, ringförmig ausgebildet. Auch diese Aufstandsfläche 22' kann durch z. B. zahlreiche Radialrippen 29 profiliert sein, so dass der Behälter auch auf feuchten Unterlagen stehen kann, ohne dass sich der Behälterboden an der Unterlage festsaugt.

Als Kunststoffmaterial für die Herstellung des Behälters eignen sich Folien, z. B. aus Polystyrol, PVC, Polypropylen u. s. Verschiedene weitere Ausgestaltungen sind auch aufgrund der allgemeinen Offenbarung in der erwähnten DE-A- 31 20 075 möglich. Die Schnittkanten des vorzugsweise aus Kartonmaterial ausgeschnittenen Manschettenzuschnittes oder auch die gesamte Manschettenoberfläche, können durch einen Paraffinüberzug gegen Feuchtigkeit geschützt sein. Die schmalseitigen Manschettenränder können durch eine Klebeschicht miteinander überlappend verbunden sein. Die dann in Axialrichtung des Behälters bzw. entlang einer Mantellinie verlaufende Ueberlappungsnaht 30 bewirkt eine entsprechende Profilierung der in der Tiefziehform angeformten Kunststoffolie, so dass die Manschette auch verdrehfest formschlüssig gehalten ist.

Die Dicke von Kartonmaterial für die Manschette entspricht beispielsweise einem Gewicht von 200 bis 300 g/m². Die Kunststoffschicht des Behälters hat im Bereich des Bodens und des Oeffnungrandes des Behälters beispielsweise eine Dicke von 0,7-0,8 mm, während sie in dem durch die Manschette verstärkten Bereich nur ca 0,1-0,2 mm beträgt, bei einer Ausgangsfolie aus z. B. Polystyrol mit einer Dicke von 0,9 mm.

## Patentansprüche

1. Verfahren zur Herstellung eines konischen Kunststoffbehälters, mit einem Bodenteil (8) und einem einen nach aussen abstehenden Oeffnungsrand (2, 4) aufweisenden Mantelteil (7), durch Tiefziehen einer Kunststoffolie gleichmässiger Dicke, wobei der Kunststoffbehälter (5) in der Tiefziehform mit einer äusseren, mit dem Kunststoffmaterial nicht verschweissenden Papierschicht (10, 10') verbunden wird, indem diese vor dem Tiefziehen in der Tiefziehform angeordnet wird und die Kunststoffolie (6) in dem für den Kontakt mit der Papierschicht (10, 10') vorgesehenen Bereich auf eine minimale, die Dichtigkeit des herzustellenden Behälters (5) gewährleistende Dicke gezogen wird, dadurch gekennzeichnet, dass diese Papierschicht die Form einer Manschette (10, 10') hat und in der Tiefziehform so angeordnet wird, dass ihre Unter- und Oberkante (3, 3', 19, 18) beim Tiefziehen von der Kunststoffolie (6) eingeschlossen wird.

2. Verfahren nach Anspruch 1, dadurch gekennzeichnet, dass der Behälter (5) mit einer ringförmig umlaufenden Profilierung (14, 27) versehen wird, die die untere ggf. obere Schnittkante (3, 3', 18) der Manschette (10, 10') unter- ggf. überfasst.

3. Verfahren nach Anspruch 1 oder 2, dadurch gekennzeichnet, dass die Manschette (10, 10') in der Tiefziehform so angeordnet wird, dass ihre Oberkante (18) an der Unterseite des nach aussen abstehenden Oeffnungsrandes (2, 4) des Behälters zum Anliegen gelangt.

4. Tiefgezogener konischer Kunststoffbehälter, hergestellt durch das Verfahren nach Anspruch 1, mit einem Bodenteil (8), einem einen nach aussen abstehenden Oeffnungsrand (2, 4) aufweisenden Mantelteil (7) und einer äusseren Papierschicht (10, 10'), die mit dem Kunststoffmaterial nich verschweisst, wobei die Kunststoffolie (6) des Behälters (5) in dem in Kontakt mit der Papierschicht (10, 10') stehenden Bereich weniger als halb so dick ist als im übrigen Bereich des Behälters (5), dadurch gekennzeichnet, dass die Papierschicht in Form einer Manschette (10, 10') den Mantelteil (7) des Behälters (5) verstärkt, indem diese formschlüssig eng an der durch Tiefziehen angeformten Kunststoffschicht (6) des Behälters (5) anliegend gehalten ist und die obere und untere Kante (18, 3, 3', 19) der Manschette (10, 10') von der Kunststoffolie (6) des Behälters (5) eingefasst ist.

5. Behälter nach Anspruch 4, dadurch gekennzeichnet, dass der Mantelteil (7) des Behälters (5) sich in seinem oberen, dem Oeffnungsrand (2, 4) zugekehrten Bereich in Richtung zur Behälteröffnung konisch verengt.

6. Behälter nach Anspruch 4 oder 5, dadurch gekennzeichnet, dass der untere Rand (11) der Manschette (10) mit einer nach innen gerichteten Umfalzung (12) versehen ist, die von der Kunststoffolie (6) des Behälters (5) eng umschlossen ist.

7. Behälter nach einem der Ansprüche 4 bis 6, dadurch gekennzeichnet, dass die Manschette (10) eine Ueberlappungsnaht (30) aufweist, die in Richtung einer Mantellinie des Behälters (5) verläuft, so dass die Kunststoffschicht (6) des Behälters (5) entsprechend profiliert formschlüssig an dieser Ueberlappungsnaht (3) anliegt.

8. Behälter nach einem der Ansprüche 4 bis 7, dadurch gekennzeichnet, dass die Unterkante (3') der Manschette (10') durch die Schulter (27) einer ringförmig umlaufenden Rille der Kunststoffolie (6') des Behälters unterfasst ist.

9. Behälter nach einem der Ansprüche 4 bis 8, gekennzeichnet durch einen sich unterhalb der Manschette (10') anschliessenden, aus der Kunststoffolie (6') ausgeformten Bodenbereich mit einem von der Bodenebene (21') abgesetzten Boden (25) zur Ausbildung eines ringförmigen Versteifungsrandes (26), wobei die sich ergebende ringförmige Aufstandsfläche (22') Profilierungen (29) aufweist.

## Claims

1. Process for making a tapered plastic receptacle with a bottom part (8) and a wall part (7) which is provided with an outwardly projecting rim (2, 4) at the open end thereof by deep-drawing a plastic sheet of uniform thickness, whereby, in the deep-drawing mould, the plastic receptacle (5) is connected to an external paper sheet (10, 10') which is not weldable with the plastic material, by placing said paper sheet in the deep-drawing mould prior to the deep-drawing and by drawing that portion of the plastic sheet which is provided for the contact with the paper sheet to a minimum leakproof thickness, characterized in that said paper sheet has the shape of a sleeve (10, 10') and is placed in the deep-drawing mould such that during deep-drawing its lower and upper edge (3, 3', 19, 18) become enclosed by the plastic sheet (6).

2. Process according to claim 1, characterized in that the receptacle (5) is provided with an annular circumferential bead (14, 27) which abuts the lower or upper cutting edge (3, 3', 18) of the sleeve (10, 10').

3. Process according to claim 1 or 2, characterized in that the sleeve (10, 10') is placed in the deep-drawing mould so that its upper edge (18) abuts the lower side of the outwardly projecting rim (2, 4) of the receptacle.

4. Deep-drawn receptacle produced according to the process of claim 1, with a bottom part (8), a wall part (7) which is provided with an outwardly projecting rim (2, 4) and an external paper sheet (10, 10') which is not weldable with the plastic material, whereby the plastic sheet (6) of the receptacle (5) which is in contact with the paper sheet (10, 10') has a thickness less than half the thickness of the other portion of the receptacle (5), characterized in that by shape of a sleeve (10, 10') the paper layer reinforces the wall part (7) of the receptacle (5) in that it is held tightly in contact with the plastic sheet (6) which by deep-drawing is formed thereon so that the plastic sheet (6) of the receptacle (5) encloses the upper and lower edge (18, 3, 3', 19) of the sleeve (10, 10').

5. Receptacle according to claim 4, characterized in that the upper portion of the wall part (7) of the receptacle (5) which is directed to the opening rim (2, 4) tapers in direction to the opening of the receptacle.

6. Receptacle according to claim 4 or 5, characterized in that the lower edge (11) of the sleeve (10) is provided with an overlapping seam (12) directed to the inside of the receptacle and tightly enclosed by the plastic sheet (6) of the receptacle (5).

7. Receptacle according to one of claims 4 to 6, characterized in that the sleeve (10) is provided with an overlapping seam (30) extending in direction of an element of the tapered form of the receptacle (5), so that the accordingly profiled plastic sheet (6) of the receptacle (5) positively engages the overlapping seam (30).

8. Receptacle according to one of claims 4 to 7, characterized in that the lower edge (3') of the sleeve (10') abuts the shoulder (27) of a circumferentially extending annular groove of the plastic sheet (6') of the receptacle.

9. Receptacle according to one of claims 4 to 8, characterized in that below the sleeve (10') a bottom portion of the receptacle (5) is formed from the plastic sheet (6') comprising a bottom (25) recessed upwardly from the bottom plane (21') so that an annular reinforcing rim (26) is formed, whereby profiles (29) are provided in the thus obtained annular foot surface (22').

**Revendications**

1. Procédé pour la fabrication d'un récipient conique en matériau synthétique comportant une partie de fond (8) et une partie enveloppe (7) présentant un rebord d'ouverture dépassant vers l'extérieur (2, 4), par emboutissage d'une feuille en matière synthétique d'épaisseur égale, le récipient en matériau synthétique (5) étant combiné dans la forme d'emboutissage avec une couche extérieure de papier (10, 10') qui ne se soude pas avec le matériau synthétique, cette couche étant placée avant l'emboutissage dans la forme d'emboutissage et la feuille en matière synthétique (6) étant, dans la zone prévue pour le contact avec la couche de papier (10, 10'), étirée lors de l'emboutissage à une épaisseur minimale garantissant l'étanchéité du récipient (5) en fabrication, caractérisé en ce que cette couche de papier a la forme d'une manchette (10, 10') et est placée de telle manière dans la forme d'emboutissage que lors de l'emboutissage son rebord inférieur (3, 3', 19) et son rebord supérieur (18) soient enveloppés par la feuille de matériau synthétique (6).

2. Procédé selon la revendication 1, caractérisé par le fait que le récipient (5) est muni d'un profilé (14, 27) circulaire s'appuyant sur ou sous le rebord inférieur (3, 3') et/ou supérieur (18) de la manchette (10, 10').

3. Procédé selon la revendication 1 ou 2, caractérisé par le fait que la manchette (10, 10') est placée de telle façon dans la forme d'emboutissage que son rebord supérieur (18) s'appuie sur la face inférieure du rebord d'ouverture dépassant vers l'extérieur (2, 4) du récipient.

4. Récipient conique embouti en matériau synthétique, réalisé d'après le procédé selon la revendication 1, comportant une partie de fond (8), une partie enveloppe (7) présentant un rebord d'ouverture dépassant vers l'extérieur (2, 4) et une couche de papier extérieure (10,10') qui ne se soude pas avec le matériau synthétique, la feuille de matériau synthétique (6) du récipient (5) ayant dans la zone de contact avec la couche de papier (10, 10'), une épaisseur inférieure à la moitié de son épaisseur dans les autres zones du récipient (5), caractérisé par le fait que la couche de papier en forme de manchette (10, 10') renforce l'enveloppe (7) du récipient (5), celle-ci étant maintenue serrée sur la couche de matériau synthétique (6) du récipient (5) formé par emboutissage et en ce que les rebords inférieur (3, 3', 19) et supérieur (18) de la manchette (10, 10') sont pris dans la feuille de matériau synthétique (6) du récipient (5).

5. Récipient selon la revendication 4, caractérisé par le fait que l'enveloppe (7) du récipient (5) possède un rétrécissement conique dans sa partie supérieure tournée vers le rebord d'ouverture (2, 4) en direction de l'ouverture du récipient.

6. Récipient selon la revendication 4 ou 5, caractérisé par le fait que le rebord inférieur (11) de la manchette (10) est muni d'un sertissage (12) dirigé vers l'intérieur qui est entouré de manière serrée par la feuille en matériau synthétique (6) du récipient (5).

7. Récipient selon l'une des revendications 4 à 6, caractérisé par le fait que la manchette (10) possède un joint de recouvrement (30), qui s'étend selon une génératrice de ce récipient (5), la couche en matériau synthétique (6) du récipient (5) s'appuyant sur ce joint de recouvrement (30) en en épousant la forme.

8. Récipient selon l'une des revendications 4 à 7, caractérisé par le fait que le rebord inférieur (3') de la manchette (10') est soutenu par l'épaulement (27) d'une rainure circulaire de la feuille en matériau synthétique (6') du récipient.

9. Récipient selon l'une des revendications 4 à 8, caractérisé par une zone de fond mise en forme à partir d'une feuille en matériau synthétique (6') et fixée en dessous de la manchette (10'), comportant un fond (25) décalé par rapport à la surface inférieure (21') pour la réalisation d'un rebord de raidissement circulaire (26), la surface d'appui circulaire (22') en résultant étant munie de profilés (29).

5

FIG. 1

FIG. 2